Europäisches Patentamt

European Patent Office

Office européen des brevets

(19)

(11) Publication number: **0 243 533 B1**

# EUROPEAN PATENT SPECIFICATION

(45) Date of publication of patent specification: **27.03.91**

(51) Int. Cl.⁵: **B21C 37/08**

(60) Publication number of the earlier application in accordance with Art.76 EPC: **0 126 795**

(21) Application number: **86111988.1**

(22) Date of filing: **30.05.83**

(54) Method for maufacturing welded pipes.

(43) Date of publication of application:
**04.11.87 Bulletin 87/45**

(45) Publication of the grant of the patent:
**27.03.91 Bulletin 91/13**

(84) Designated Contracting States:
**DE FR GB NL SE**

(56) References cited:
**FR-A- 774 981**
**GB-A- 937 137**
**US-A- 2 977 914**

(73) Proprietor: **KAWASAKI JUKOGYO KABUSHIKI KAISHA**
**1-1 Higashikawasaki-cho 3-chome**
**Chuo-ku Kobe-shi Hyogo-ken(JP)**

(72) Inventor: **Matsui, Shigetomo**
**4-25, Higashiyama-Cho**
**Higashiosaka-Shi Osaka-Fu(JP)**
Inventor: **Hasegawa, Hisao**
**13-24, Nishiokamoto 2-Chome Higashinada-Ku**
**Kobe-Shi Hyogo-Ken(JP)**

(74) Representative: **Klunker . Schmitt-Nilson . Hirsch**
**Winzererstrasse 106**
**W-8000 München 40(DE)**

## Description

### BACKGROUND OF THE INVENTION

The present invention relates to a method according to the preamble of claim 1, as it is known from US-A-2 666 831.

The known method uses an inductor for producing the welding temperature, which extends transversely across the flat strip and along the longitudinal edges thereof including the welding location. The known method does not refer to the buckling or waving problem associated with the manufacture of thin-walled welded pipes.

The present invention relates, more particularly, to a method for preventing buckling or waving of edges of the strip in the manufacture of thin-walled welded tubular products.

Various types and kinds of pipes are used for various purposes. Among such pipes welded pipes are widely used because they can be fabricated in a relatively simple manner at low cost.

In the production of a welded pipe, the strip which is wound in the form of a coil is unwound and fed through shaping rolls which gradually bring together the two longitudinal edges of the strip to bend the same into a tubular form circular in cross section, and finally the longitudinal edges of the strip are welded together. When the strip is being bent, the longitudinal edges of the strip are subjected to tensile stress in the longitudinal direction and plastically deformed. However, when the edges are abutted against each other, the strip except its edge portions is subjected to tensile stress while the edge portions are subjected to compressive stress due to the plastic strain at the edge portion during the bending process. As a result, during the welding process, the edges are subject to buckling or waving along the weld line. In the case of thick-walled pipes, such buckling or edge waving hardly occur, but in the case of thin-walled pipes, it frequently occurs. Therefore, it has been difficult to manufacture thin-walled welded pipes.

### SUMMARY OF THE INVENTION

The present invention seeks to overcome the above and other problems encountered in the manufacture of thin-walled welded pipes. An object of the invention is to provide a method for the manufacture of welded pipes in which the strip is heated in such a manner that during the bending process of the strip, tensile stress exerted on the edge portions thereof can be reduced to a minimum, and after the edges have been abutted against each other, the compressive stress exerted on the edge portions can be also reduced to a minimum, whereby thin-walled welded pipes which have hitherto been difficult to manufacture can be manufactured without difficulty.

The method according to the invention is characterized by the features of the characterizing part of claim 1.

According to the present invention, during the process for bending the strip gradually into a tubular form or during the process in which the edges of the strip are held in abutment against each other, the strip is substantially or partially heated except its edge portions so that it is subjected to compressive stress while the edge portions are subjected to tensile stress. Therefore, the abutted edges are not subjected to compressive stress before they are welded together. As a result, the buckling of the edges can be prevented, and consequently the so-called edge waving can be avoided. Thus it becomes possible to manufacture thin-walled welded pipes without difficulty. Thus, various kinds and types of welded pipes can be fabricated without difficulty.

With respect to rule 25(2) reference is made to divisional application EP-A-0126795, which contains common subject matter but different claims.

The above and other objects, effects and features of the present invention will become more apparent from the following description of preferred embodiments thereof taken in conjunction with the accompanying drawings.

### BRIEF DESCRIPTION OF THE DRAWINGS

FIGS. 1 and 2 are views explanatory of the basic principle of the method for the manufacture of tubular products;

FIG. 3 is a view, in side elevation, showing how tensile stress is exerted on the edge portions of the strip, resulting in edge buckling or waving thereof;

FIG. 4 is a view, in side elevation, showing a preferred form of the present invention;

FIG. 5 is a view explanatory of stress distributions in the strip and the welded pipe after being cooled to room temperature, according to the method of FIG. 4;

FIG. 6 is a view, in side elevation, showing a modification of the preferred form of the present invention; and

FIG. 7 is a view explanatory of stress distributions in the strip and the welded pipe after being cooled to room temperature, according to the method of FIG.6

### DETAILED DESCRIPTION OF THE INVENTION

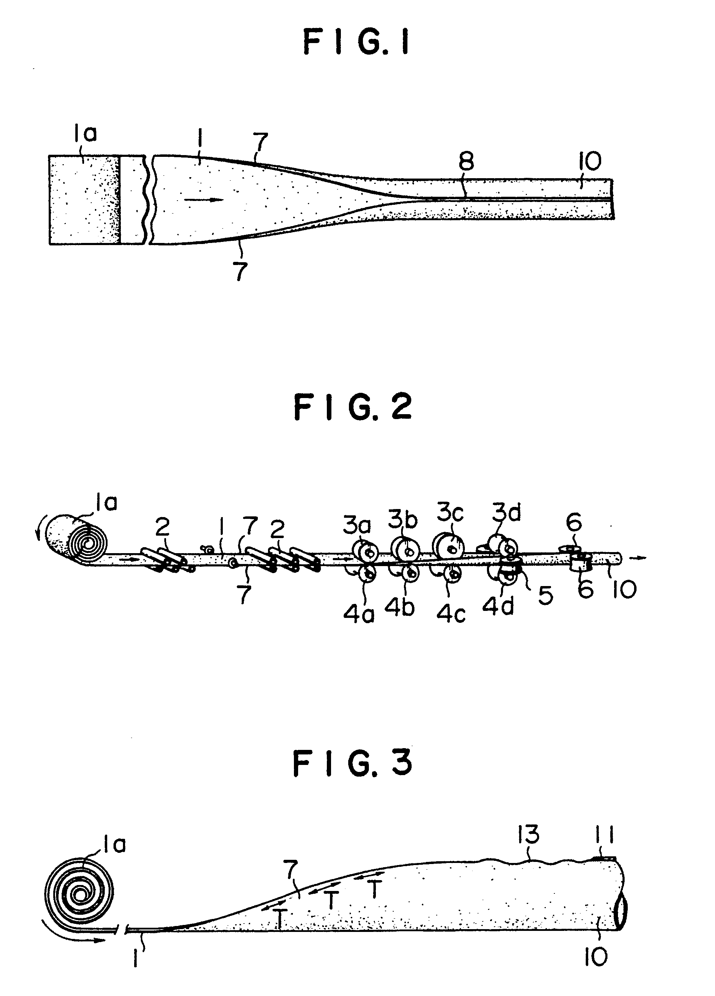

Referring first to FIGS. 1 and 2, a strip of steel 1 is previously wound in the form of a coil 1a. The strip 1 is unwound from the coil 1a through a plurality of rollers 2 and then fed through conventional shaping rolls 3a, 4a, 3b, 4b, 3c, 4c, 3d, 4d and 5 which gradually bend the strip 1 into a tubular shape, its longitudinal or side edges 7 being gradually bent toward, and finally abutted against, each other by a pair of shaping rollers or pressure rollers 6 as indicated by 8 in FIG. 1. Thus, the strip 1 is formed into a tubular section 10 circular in cross section. Thereafter, the abutting edges 8 are welded in the longitudinal direction as will be described hereinafter.

During the process in which the strip 1 is bent into the form of the tubular section 10; that is, during the process in which the side edges 7 are bent or drawn toward each other, a longitudinal tensile stress T in excess of the elastic limit of the strip 1 is exerted on the side edges 7 as shown in FIG. 3 so that the edges 7 are subjected to plastic deformation. At the end of the bending process when the edges 7 are abutted against each other as shown at 8, tensile stress is exerted on the tubular section 10. However, the edges 7 which have been subjected to the plastic deformation are subjected to compressive stress because even after the edges 7 have been abutted against each other to settle in a state parallel with the axis of the tubular section 10, they cannot return fully to the condition prior to being subjected to the tensile plastic deformation.

As a result, as shown in FIG. 3, before the abutted edges 8 are welded together, the edges 7 buckle mainly in the region between the shaping roll 3d and the welding position, so that edge waving 13 occurs. In the case of pipes with relatively thick wall, almost no edge waving 13 occurs, but in the case of pipes with relatively thin wall, edge waving 13 frequently occurs so that the welding of the abutted edges 8 becomes very difficult. For instance, when the ratio $t/D$, where $t$ is the thickness of the strip and D is the diameter of the pipe, is less than 0.02, it becomes impossible to manufacture tubular products.

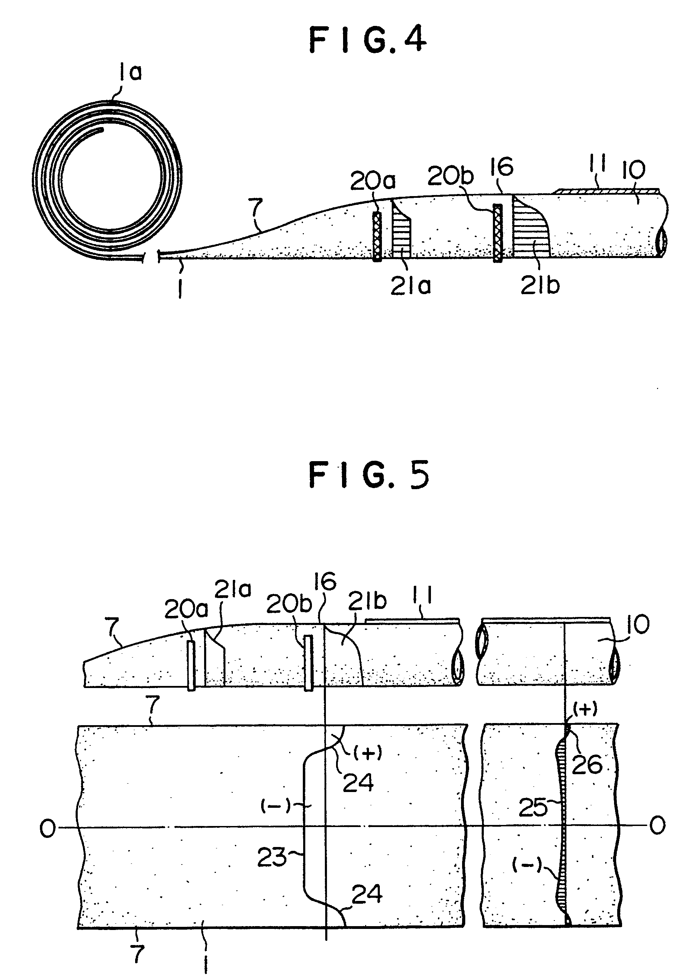

According to a form of the present invention, as illustrated in FIGS. 4 and 5 a suitable number (two in the illustrated example) of heating devices 20a and 20b, such as high-frequency heaters, are disposed between the shaping rolls so as to surround the strip 1 being bent except the portions of its edges 7. That is, the heating devices 20a and 20b are in the form of an arc and temperature distributions 21a and 21b are obtained.

During the bending process the edges 7 are subjected to tensile stress as mentioned hereinbefore with reference to FIG. 3. Because of the temperature distributions 21a and 21b after passing through the heating devices 20a and 20b, respectively, the main portion of the strip 1 except the portions of the edges 7 is subjected to compressive stress, and consequently the edges 7 are subjected to tensile stress at the edge abutting position 16.

If the induction heating devices 20a and 20b were not provided, the main portion of the strip 1 except the portions of the edges 7 would be subjected to tensile stress while the edges 7 would be subjected to compressive stress so that the edges 7 would be subjected to buckling or waving. However, according to this method, as shown in FIG.5 illustrating the development of the strip 1 with its centerline indicated by O-O, the main portion of the strip 1 except the portions of the edges 7 is subjected to compression (-) as indicated by 23 at the edge abutting position 16 while the portions of the edges 7 are subjected to tension (+) as indicated by 24. As a result, the edges 7 are prevented from buckling.

When the edges 7 without waving are welded as indicated by 11, they are subjected to tensile residual stress due to the welding. If the strip 1 were not heated in the manner described above, the residual stress would exceed the yield point of the strip 1, but, according to this method, when the welded pipe is cooled to room temperature, the tensile residual stress is considerably decreased as indicated by 25 and 26 in FIG.5 so that the welded pipe is amply free of stress corrosion cracking.

The thus welded pipe is free from buckling or waving and the residual stresses are considerably minimized. The welded pipe has clean and smooth surfaces.

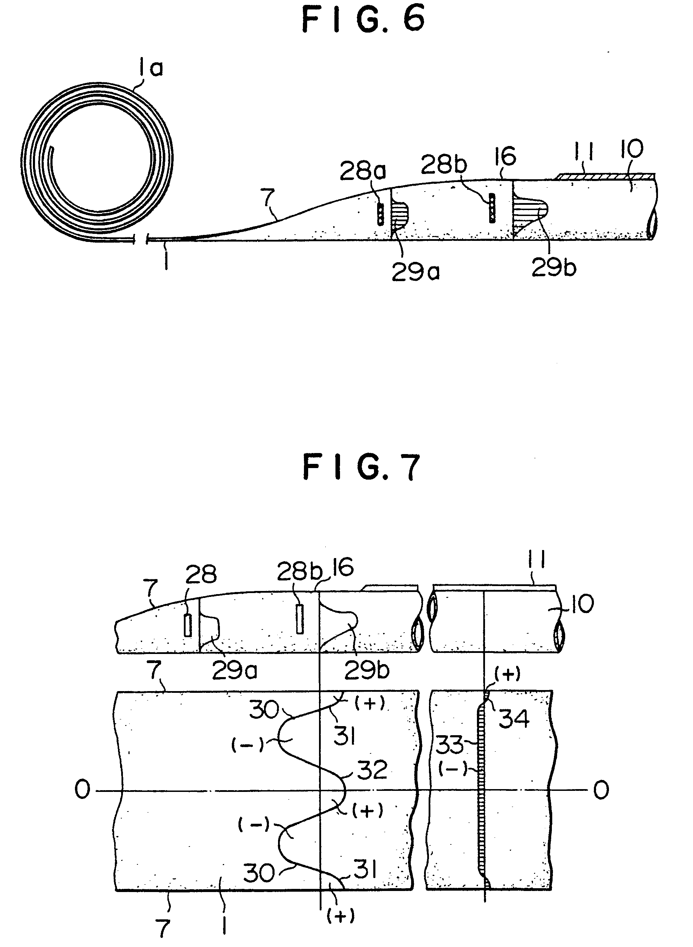

A modified method shown in FIGS. 6 and 7 is substantially similar to the modes as shown in FIGS. 4 and 5 except that two heating devices 28a and 28b are sc disposed as to heat only portions of the strip 1 in the circumferential direction thereof. Therefore, the strip 1 is heated as indicated by 29a and 29b so that, as shown in FIG. 7, at the edge abutting position 16, the portions of the edges 7 and the center portion are subjected to tension (+) as indicated by 31 and 32, respectively, while the portions therebetween are subjected to compression (-) as indicated by 30. Therefore, when the welded pipe is cooled to room temperature, the residual stresses are considerably reduced as indicated by 33 and 34.

It is to be understood that the present invention is not limited to the specific example described above. For instance, instead of the high-frequency heat induction devices, any other suitable heating means such electric strip heaters may be used. Furthermore the present invention may be applied equally to the manufacture of thick-walled tubular products.

## Claims

1. A method for the manufacture of welded pipes in which a strip (1) is fed through shaping rolls which gradually bring together the longitudinal edges (7) of the strip (1) in opposed abutting relation to bend the strip (1) into a tubular form, and then the thus opposed edges of the bent tubular section (10) are welded together, heat being applied to part of the strip (1) before welding together its edges (7), characterized by the steps of preventing buckling or waving of the edges (7) by applying the heat to one or several portions of the strip (1), except its portions of the edges (7), during the process for bending the strip (1) gradually into a tubular form and/or the process in which the edges (7) of the strip (1) are held in abutment against each other, so that the heated portion(s) of the strip (1) is (are) subjected to compressive stress while the portions of the edges (7) are subjected to tensile stress, and welding the edges (7) together under the above conditions.

2. The method according to claim 1 wherein the heat is applied by arc-shaped heating means (20a; 20b) surrounding the strip (1) except its portions of the edges (7).

3. The method according to claim 1 wherein the heat is applied to portions of the strip (1) between its portions of the edges (7) and its longitudinal central portion.

4. The method according to any one of claims 1 to 3 wherein the heat is applied by a plurality of heating means (20a, 20b; 28a, 28b) disposed successively at intervals in the direction of feed of the strip (1).

## Revendications

1. Un procédé de fabrication de tubes soudés dans lequel une bande (1) est introduite entre des rouleaux de mise en forme qui rapprochent progressivement les bords longitudinaux (7) de la bande (1) en relation de butée face à face afin de cintrer la bande (1) en forme de tube, et puis les bords ainsi face-à-face du tronçon tubulaire cintré (10) sont soudés ensemble, de la chaleur étant appliquée à une partie de la bande (1) avant le soudage de ses bords (7) ensemble, caractérisé par des mesures de prévention du flambage et de l'ondulation des bords (7) consistant à appliquer de la chaleur à une ou plusieurs parties de la bande (1) sauf dans les parties des bords (7), au cours du processus de cintrage de la bande (1), pour lui donner progressivement une forme de tube et/ou le processus dans lequel les bords (7) de la bande (1) sont maintenus en butée l'un contre l'autre, afin que la ou les partie(s) chauffée(s) de la bande (1) soi(en)t soumise(s) à un effort de compression tandis que les parties des bords (7) sont soumises à un effort de traction, et le soudage des bords (7) ensemble dans les conditions ci-dessus.

2. Le procédé selon la revendication 1 dans lequel la chaleur est appliquée au moyen d'un chauffage en forme d'arc (20a ; 20b) entourant la bande (1) sauf dans les parties de ces bords (7).

3. Le procédé selon la revendication 1 dans lequel la chaleur est appliquée aux parties de la bande (1) entre les portions de ses bords (7) et sa partie centrale longitudinale.

4. Le procédé selon l'une quelconque des revendications 1 à 3 dans lequel la chaleur est appliquée grâce à plusieurs moyens de chauffage (20a, 20b ; 28a, 28b) disposés successivement à intervalles dans la direction d'avance de la bande (1).

## Ansprüche

1. Verfahren zur Herstellung geschweißter Rohre, bei dem ein Streifen (1) durch Formgebungsrollen hindurchgeführt wird, die die Längskanten (7) des Streifens (1) in einander gegenüberliegender und aneinander anstoßender Weise allmählich zusammenbringen, um den Streifen (1) in eine rohrförmige Gestalt zu krümmen, und bei dem die auf diese Weise einander gegenüberliegend angeordneten Kanten des rohrförmig gekrümmten Abschnitts (10) dann miteinander verschweißt werden, wobei auf einen Teil des Streifens (1) Wärme aufgebracht wird, bevor dessen Kanten (7) miteinander verschweißt werden, gekennzeichnet durch folgende Schritte: Verhindern eines Verwerfens oder einer Wellung der Kanten (7) durch Aufbringen der Wärme auf einen oder mehrere Bereiche des Streifens (1) mit Ausnahme der Bereiche seiner Kanten (7) während des Vorgangs zum Krümmen des Streifens (1) in allmählicher Weise in eine rohrförmige Gestalt und/oder während des Vorgangs, bei dem die Kanten (7) des Streifens (1) in aneinander anstoßender Weise gehalten werden, so daß der bzw. die erwärmten Bereiche des Streifens (1) einer Druckspannung ausgesetzt werden, während die Bereiche der Kanten (7) einer Zugspannung ausgesetzt werden, sowie Verschweißen der Kanten (7) miteinander unter den oben genannten Bedingungen.

2. Verfahren nach Anspruch 1, dadurch gekennzeichnet, daß die Wärme durch eine bogenförmige Heizeinrichtung (20a; 20b) ausgeübt wird, die den Streifen (1) mit Ausnahme der Bereiche seiner Kanten (7) umgibt.

3. Verfahren nach Anspruch 1, dadurch gekennzeichnet, daß die Wärme auf Bereiche des Streifens (1) aufgebracht wird, die sich zwischen den Bereichen seiner Kanten (7) und seinem Längsmittenbereich befinden.

4. Verfahren nach einem der Ansprüche 1 bis 3, dadurch gekennzeichnet, daß die Wärme durch eine Mehrzahl von Heizeinrichtungen (20a, 20b; 28a, 28b) aufgebracht wird, die in Förderrichtung des Streifens (1) in Abständen aufeinander folgend angeordnet sind.

# FIG. 1

# FIG. 2

# FIG. 3

6

# F I G. 4

# F I G. 5

# F I G. 6

# F I G. 7